# FASCICULE DE BREVET EUROPEEN

(11) **EP 3 284 343 B1**
(45) Date de publication et mention de la délivrance du brevet: **06.01.2021**
(21) Numéro de dépôt: 17185029.0
(22) Date de dépôt: 04.08.2017
(51) Int. Cl.: A01K 63/02

(54) **DISPOSITIF POUR STOCKER ET TRANSPORTER DES PRODUITS AQUACOLES ET PROCEDE DE STOCKAGE ET DE TRANSPORT CORRESPONDANT**
VORRICHTUNG ZUM LAGERN UND TRANSPORTIEREN VON AQUAKULTURPRODUKTEN, UND ENTSPRECHENDE VERFAHREN ZUM LAGERN UND TRANSPORTIEREN
DEVICE FOR STORING AND TRANSPORTING AQUACULTURAL PRODUCTS AND CORRESPONDING STORAGE AND TRANSPORT METHOD

(30) Priorité: 12.08.2016 FR 1601227
(43) Date de publication de la demande: 21.02.2018
(73) Titulaire: Sea Food Container Manufacture, 13002 Marseille (FR)
(72) Inventeur: ONO DIT BIOT, Sylvain, 13620 Carry le Rouet (FR); FAGIANO, Giancarlo, 13470 Carnoux (FR); LEJEUNE, Armand, 17170 Saint Jean de Liversay (FR)
(74) Mandataire: GPI & Associés

(56) Documents cités:
- CN-A- 105 475 212
- US-A1- 2012 192 798

## Description

La présente invention se rapporte au domaine des dispositifs permettant de réaliser le stockage et le transport de produits aquacoles. De tels dispositifs sont ainsi généralement positionnés dans une enceinte isotherme afin de maintenir constante la température des produits aquacoles lors de leur stockage et de leur transport. Ainsi, à l'aide de tels dispositifs, les produits aquacoles peuvent avantageusement être stockés et transportés vivants sur de très longues distances et une durée de plusieurs semaines voire de plusieurs mois.

De tels produits aquacoles peuvent ainsi être notamment formés par des coquillages, des crustacés, des mollusques, des poissons ou des algues. Plus généralement, de tels produits aquacoles sont des êtres vivant dans une eau salée ou dans une eau douce.

L'invention a également pour objet un procédé de stockage et de transport de tels produits aquacoles.

De façon générale, et tel que décrit dans les documents CN 105 475 212, US 2012/192798, FR 2 957 566 et WO 2016/020579, il est connu de stocker et de transporter des produits aquacoles dans une structure mobile. Une telle structure mobile comporte alors d'une part un compartiment de stockage dans lequel les produits aquacoles sont positionnés et d'autre part un compartiment technique permettant notamment de purifier ou de filtrer de l'eau pour permettre d'approvisionner en eau saine les produits aquacoles. Un tel dispositif comporte également des moyens hydrauliques permettant d'injecter de l'eau saine dans des bacs et de récupérer l'eau usée.

En outre, il est possible d'utiliser l'eau en circuit fermé pour purifier les produits aquacoles lors de leur stockage avant leur transport. Les eaux usées récupérées en sortie du compartiment de stockage peuvent être acheminées dans une réserve tampon par des conduits d'évacuation.

Un tel dispositif peut notamment être positionné dans une enceinte isotherme et placé dans un container de transport de dimensions standardisées.

Cependant, ce type de dispositif ne permet pas de réaliser ponctuellement et temporairement une séquence de ballastage pour transférer toute l'eau contenue dans le compartiment de stockage vers le compartiment technique.

Lorsqu'une personne souhaite avoir accès au volume intérieur du compartiment de stockage, il doit alors procéder à une opération de vidange de l'eau au moins contenue dans le compartiment de stockage. Un tel dispositif n'est alors pas adapté pour par exemple permettre ponctuellement un contrôle sanitaire ou douanier en donnant accès à une personne au volume interne du compartiment de stockage.

Ainsi, un premier objectif de l'invention est de permettre à une personne de contrôler la présence des produits aquacoles, ou par exemple leur état de vivacité, dans le compartiment de stockage lors de leur stockage et/ou de leur transport sans avoir à vidanger l'eau présente dans le compartiment de stockage. L'invention permet d'éviter un gaspillage en eau car, une fois le contrôle effectué, l'eau transférée dans le compartiment technique peut être réinjectée dans le compartiment de stockage.

De plus, avec les dispositifs de stockage et transport conformes à l'art antérieur, il n'est pas possible de traiter l'intégralité de l'eau contenue dans le compartiment de stockage. Il peut en effet rester des poches d'eau stagnante ou de rétention qui ne peuvent être traitées par une circulation d'eau en continu dans le compartiment de stockage.

Par suite, un second objet de l'invention est de permettre de traiter ponctuellement l'intégralité de l'eau contenue dans le compartiment de stockage, y compris les éventuelles poches de rétention d'eau aptes à contenir des sédiments tels des cadavres de produits aquacoles en décomposition.

L'invention concerne donc un dispositif pour stocker et transporter des produits aquacoles suivant la revendication1, un tel dispositif comportant :
- une structure mobile comportant :
   - un compartiment de stockage permettant de stocker une pluralité de contenants adaptés pour recevoir les produits aquacoles, et
   - un compartiment technique permettant de traiter en continu une eau en provenance du compartiment de stockage puis de faire circuler une eau traitée vers le compartiment de stockage,
- un circuit hydraulique de circulation d'eau en continu comportant :
   - un réseau d'alimentation permettant de mettre en communication hydraulique le compartiment technique avec le compartiment de stockage,
   - un réseau de retour permettant de mettre en communication hydraulique le compartiment de stockage avec le compartiment technique, et
   - au moins une pompe de circulation pour alimenter en continu le compartiment de stockage avec l'eau traitée.
- au moins une pompe de ballastage pour permettre ponctuellement et temporairement un transfert de toute l'eau contenue dans le compartiment de stockage vers le compartiment technique,

Selon l'invention, un tel dispositif est remarquable en ce qu'il comporte :
- des organes de commande pour au moins commander une séquence de ballastage, cette séquence de ballastage étant mise en œuvre en commandant simultanément d'une part une coupure d'une alimentation en énergie électrique de la (ou des) pompe(s) de circulation et d'autre part une alimentation en énergie électrique de la (ou des) pompe(s) de ballastage, et
- un circuit hydraulique de ballastage distinct du circuit hydraulique de circulation d'eau en continu, le circuit hydraulique de ballastage permettant de mettre en communication hydraulique au moins une zone basse du compartiment de stockage avec une zone distale du compartiment technique.

Autrement dit, la séquence de ballastage est mise en œuvre via les organes de commande en coupant l'alimentation en énergie électrique de la (ou des) pompe(s) de circulation et en alimentant en énergie électrique la (ou les) pompe(s) de ballastage. Cette énergie électrique est fournie par une source d'énergie externe connectée électriquement au dispositif.

De tels organes de commande peuvent notamment être agencés sur la structure mobile en dehors du compartiment technique et/ou du compartiment de stockage.

Par ailleurs, le circuit hydraulique de ballastage comporte une première conduite permettant de connecter la zone basse du compartiment de stockage avec la pompe de ballastage puis une deuxième conduite permettant de connecter la pompe de ballastage avec la zone distale du compartiment technique.

Cette zone distale du compartiment technique peut avantageusement être agencée dans une partie haute du compartiment technique pour éviter un retour en sens inverse de l'eau stockée dans le compartiment technique vers le compartiment de stockage.

Bien entendu, un évent doit permettre à l'air de pénétrer dans le compartiment de stockage pour permettre d'extraire l'eau qu'il contient. Un tel évent est alors automatiquement ouvert d'une part lors d'une séquence de ballastage pour faire entrer l'air dans le compartiment de stockage et d'autre part lors du remplissage avec l'eau du compartiment de stockage pour faire sortir l'air contenu dans le compartiment de stockage.

En outre, le circuit hydraulique de circulation d'eau en continu et/ou le compartiment technique peut/peuvent comporter un système de traitement apte à filtrer l'eau en provenance du compartiment de stockage. Une telle filtration peut alors par exemple être réalisée par un procédé de "microbullage" sous pression tel que celui mis en œuvre par les systèmes de traitement commercialisés sous la marque SKIM® ou PROTOS® par la société EMYG. Un tel microbullage permet alors de filtrer de particules de dimensions particulièrement fines et par exemple des particules de dimensions inférieures au micron.

Selon une caractéristique avantageuse de l'invention, le compartiment technique peut comporter une enveloppe étanche pour former un réservoir de ballastage apte à contenir toute l'eau initialement contenue dans le compartiment de stockage lors d'une séquence de ballastage.

De cette manière, le réservoir de ballastage est directement formé par les parois délimitant le volume intérieur du compartiment technique.

Avantageusement, le dispositif peut comporter au moins un capteur de niveau apte à détecter un niveau d'eau maximal à l'intérieur du réservoir de ballastage, les organes de commande permettant de commander une coupure de l'alimentation en énergie électrique de la (ou des) pompe(s) de ballastage lorsque l'eau contenue dans le compartiment technique a atteint le niveau d'eau maximal.

Par suite, lorsqu'une séquence de ballastage est lancée manuellement ou automatiquement son arrêt peut être généré automatiquement au moyen d'un capteur de niveau d'eau à l'intérieur du réservoir de ballastage. Un tel capteur peut notamment être un capteur mécanique à flotteur utilisant la poussée d'Archimède produite par l'eau pour déplacer une portion mobile du capteur de niveau lors de la montée du niveau d'eau dans le réservoir de ballastage.

En pratique, les organes de commande peuvent comporter un commutateur à actionnement manuel permettant de commander manuellement la séquence de ballastage.

Dans ce cas, la séquence de ballastage peut être déclenchée manuellement par un opérateur souhaitant accéder au compartiment de stockage par exemple pour vérifier la présence de la marchandise transportée, conformément aux documents d'accompagnement de transport. Un tel contrôle doit en effet être possible pour permettre de vérifier l'absence ou la présence de tout produit non déclaré et/ou de toute substance illicite.

Selon une autre caractéristique avantageuse de l'invention, les organes de commande peuvent comporter un programmateur permettant de programmer à un instant prédéterminé au moins une séquence de ballastage.

Ainsi, le programmateur permet d'effectuer automatiquement le déclenchement d'au moins une séquence de ballastage pour par exemple reproduire temporairement un phénomène de marée en laissant quelques minutes, voire quelques heures, les produits aquacoles à l'air libre dans le compartiment de stockage.

Un tel programmateur est avantageusement connecté à un module de communication sans fil tel un module Wifi ou Bluetooth pour permettre à un opérateur de programmer à distance la ou les séquence(s) de ballastage d'un ou plusieurs dispositif(s) simultanément.

Avantageusement, le dispositif peut comporter également :
- au moins un capteur apte à effectuer une pluralité de mesures d'un paramètre physico-chimique de l'eau en provenance du compartiment de stockage,
- au moins une mémoire pour stocker au moins une valeur de seuil prédéterminée du paramètre physico-chimique, et
- une unité de calcul pour comparer chaque mesure du paramètre physico-chimique avec la valeur de seuil prédéterminée.

De cette manière, les organes de commande peuvent alors permettre de commander automatiquement au moins une séquence de ballastage lorsque la mesure du paramètre physico-chimique est supérieure, ou inversement inférieure, à la valeur de seuil prédéterminée.

Autrement dit, un tel dispositif permet de contrôler en temps réel un paramètre physico-chimique de l'eau tel que par exemple son taux d'oxygène ou encore sa température.

Ainsi lorsque, par exemple, la température de l'eau passe au dessus d'une valeur de seuil prédéterminée, ou que le taux d'oxygène passe en dessous d'une valeur de seuil prédéterminée, les organes de commande peuvent déclencher automatiquement une séquence de ballastage. De cette manière, les produits aquacoles sont alors mis automatiquement au contact direct de l'air et peuvent alors vivre plus longtemps que dans de l'eau impropre à garantir leur stockage dans de bonnes conditions.

En parallèle, un message d'alerte peut également être transmis à une unité de gestion extérieure par des moyens de communication sans fil utilisant par exemple un module Wifi, Bluetooth ou encore une puce de type GSM ou GRPS notamment pour transmettre ce message d'alerte et informer une personne supervisant la qualité de stockage et/ou de transport des produits aquacoles présents dans le (ou les) dispositif(s).

En pratique, le dispositif peut comporter aussi :
- une pompe de ballastage de secours connectée au circuit hydraulique de ballastage,
- une source d'énergie autonome permettant d'alimenter en énergie électrique la pompe de ballastage de secours.

Dans ce cas, les organes de commande peuvent comporter un système de secours pour commander automatiquement la séquence de ballastage au moyen de la pompe de ballastage de secours.

De cette manière, le dispositif peut, en cas de coupure accidentelle de l'alimentation électrique extérieure, déclencher automatiquement une procédure de ballastage en alimentant en énergie électrique la pompe de ballastage de secours.

La source d'énergie autonome peut notamment se présenter sous la forme d'une batterie présentant une tension de 24 volts agencée au niveau de la structure mobile du dispositif.

Selon une autre caractéristique avantageuse de l'invention, la structure mobile peut comporter une enceinte isotherme permettant de contenir le compartiment de stockage et le compartiment technique.

Un tel agencement permet en effet de limiter la consommation en énergie électrique du dispositif pour maintenir constante la température de l'eau. En effet, il est très important d'éviter les chocs thermiques pour limiter le stress des produits aquacoles lors de leur stockage et/ou de leur transport.

Avantageusement, une telle enceinte isotherme peut comporter une unité frigorifique permettant de réguler la température de l'eau traitée dans le compartiment technique.

En effet, l'eau contenue dans le compartiment de stockage doit pouvoir être maintenue à une température inférieure à 10°C, voire même inférieure à 5°C pour garantir des conditions de stockage/transport optimales pour les produits aquacoles. L'unité frigorifique est alors par exemple connectée à un système de traitement apte à filtrer l'eau en provenance du compartiment de stockage et à la refroidir simultanément par un système de type échangeur thermique à plaques ou à serpentins notamment.

En pratique, le compartiment de stockage et le compartiment technique peuvent former un ensemble monolithique, le compartiment de stockage et le compartiment technique comportant des parois longitudinales communes formées en continu dans un même matériau, ces parois longitudinales étant agencées parallèlement par rapport à un axe longitudinal X du dispositif.

Dans ce cas, les parois longitudinales du compartiment de stockage et du compartiment technique sont formées d'un seul tenant et garantissent une tenue mécanique optimale de l'ensemble ainsi formé sans nécessiter des moyens d'assemblage supplémentaires.

Selon une autre caractéristique avantageuse de l'invention, la structure mobile peut comporter une cloison de séparation transversale séparant le compartiment de stockage et le compartiment technique, une telle cloison de séparation transversale étant agencée parallèlement par rapport à un axe transversal Y du dispositif.

Cette cloison de séparation permet alors de définir simultanément les parois transversales respectives agencées sensiblement verticalement à la jonction du compartiment de stockage et du compartiment technique.

Avantageusement, la cloison de séparation transversale peut comporter une ouverture équipée d'une trappe de visite escamotable permettant à un opérateur un accès au volume interne du compartiment technique.

Par ailleurs, une telle trappe de visite peut avantageusement être transparente pour permettre un contrôle visuel du volume interne du compartiment technique depuis le compartiment de stockage sans nécessiter d'avoir à déposer cette trappe de visite escamotable de la cloison de séparation.

Selon une autre caractéristique avantageuse de l'invention, la porte principale d'accès du compartiment de stockage peut être au moins partiellement transparente.

Ainsi, une telle porte principale d'accès permet un contrôle visuel du volume interne du compartiment de stockage depuis l'extérieur du dispositif sans imposer une ouverture de cette porte principale d'accès.

Avantageusement, la structure mobile peut comporter au moins une pièce de préhension permettant de réaliser une manipulation et un déplacement du dispositif au moyen d'un engin de manutention.

Cette pièce de préhension permet alors par exemple de faciliter le chargement/déchargement de la structure mobile sur une remorque de camion, sur un wagon plat ou encore sur un navire porte-conteneur, par exemple.

La présente invention a aussi pour objet le procédé pour stocker et transporter des produits aquacoles dans un dispositif selon l'invention, conformément à la revendication 15, un tel procédé comportant :
- une étape préliminaire consistant à disposer dans un compartiment de stockage dudit dispositif une pluralité de contenants adaptés pour recevoir les produits aquacoles,
- une étape de démarrage d'une circulation en continu d'une eau traitée depuis un compartiment technique dudit dispositif vers le compartiment de stockage et une eau en provenance du compartiment de stockage vers le compartiment technique, ladite circulation en continu étant mise en œuvre par au moins une pompe de circulation,
- au moins une séquence de ballastage pour permettre ponctuellement et temporairement un transfert de toute l'eau contenue dans le compartiment de stockage vers ledit compartiment technique, la (ou les) séquence(s) de ballastage étant mise(s) en œuvre par au moins une pompe de ballastage.

Un tel procédé est remarquable en ce que la (ou les) séquence(s) de ballastage comporte(nt) :
- une étape d'arrêt générant une coupure d'une alimentation en énergie électrique de la (ou des) pompe(s) de circulation, puis
- une étape de pompage générant une alimentation en énergie électrique de la (ou des) pompe(s) de ballastage pour réaliser ponctuellement et temporairement le transfert de toute l'eau contenue dans le compartiment de stockage vers le compartiment technique, le transfert s'effectuant dans un circuit hydraulique de ballastage distinct d'un circuit hydraulique de circulation d'eau en continu, ledit circuit hydraulique de ballastage permettant de mettre en communication hydraulique au moins une zone basse dudit compartiment de stockage avec une zone distale dudit compartiment technique.

Un tel procédé est en effet adapté pour permettre d'éviter une vidange systématique du dispositif pour accéder au volume intérieur du compartiment de stockage et par conséquent il permet de réaliser des économies de consommation d'eau importante lors du transport et du stockage des produits aquacoles.

L'invention et ses avantages apparaîtront avec plus de détails dans le cadre de la description qui suit avec des exemples donnés à titre illustratif en référence aux figures annexées qui représentent :
- la figure 1, une vue en perspective d'un dispositif conforme à l'invention,
- la figure 2, une vue en perspective éclatée d'un dispositif conforme à l'invention,
- les figures 3 à 7, des vues en perspective partielles d'un dispositif conforme à l'invention, et
- la figure 8, une vue schématique d'un procédé conforme à l'invention.

Les éléments présents dans plusieurs figures distinctes sont affectés d'une seule et même référence.

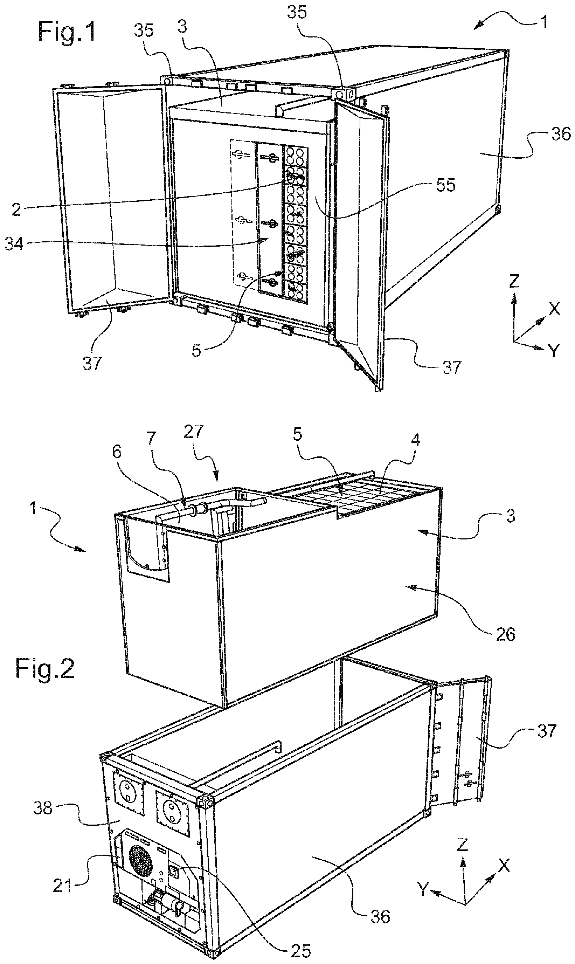

On note que trois directions X, Y et Z orthogonales les unes par rapport aux autres sont représentées sur les figures 1 à 3.

L'axe X est dit longitudinal dans la mesure où il est orienté suivant la dimension la plus longue du dispositif. Un autre axe Y est dit transversal et s'étend perpendiculairement par rapport à l'axe longitudinal X. Enfin, un troisième axe Z est dit d'élévation et correspond aux dimensions en hauteur du dispositif.

Comme déjà évoqué, l'invention se rapporte à un dispositif 1 pour stocker et transporter des produits aquacoles, tels que notamment des crustacés et plus particulièrement des homards.

Tel que représenté à la figure 1, un tel dispositif 1 comporte une structure mobile 3 dans laquelle est agencée une pluralité de contenants 5 adaptés pour recevoir individuellement les produits aquacoles 2.

Classiquement, une telle structure mobile 3 peut alors être agencée à l'intérieur d'une enceinte isotherme 36 munie de portes 37 et d'au moins une pièce de préhension 35 de manière à faciliter la manipulation et la préhension du dispositif 1.

Telle que représentée, une telle structure mobile 3 comporte quant à elle une porte principale d'accès 34 peut avantageusement être de type coulissante. Cette porte principale d'accès 34 est alors montée en liaison glissière de manière à permettre son déplacement en translation parallèlement par rapport à une paroi avant 55 de la structure mobile 3. Une telle porte principale d'accès 34 est alors mobile entre une position ouverte donnant l'accès à l'intérieur de la structure mobile 3 et une position fermée permettant le stockage et le transport des produits aquacoles dans un compartiment de stockage 4 rempli d'eau en circulation.

En outre, une fois le compartiment de stockage 4 rempli d'eau, c'est la pression de l'eau s'exerçant sur la porte principale d'accès 34 vers l'extérieur de la structure mobile 3 qui peut permettre d'assurer une étanchéité à l'eau entre la porte principale d'accès 34 et la paroi avant 55 de la structure mobile 3. Un joint d'étanchéité périphérique non représenté peut également avantageusement être rapporté autour d'une ouverture ménagée dans la paroi avant 55 de la structure mobile 3. Des poignées de maintien permettent également de maintenir en position la porte principale d'accès 34 par rapport à l'ouverture avant que le compartiment de stockage 4 soit rempli d'eau ou une fois le compartiment de stockage 4 vidé de l'eau qu'il contenait.

Avantageusement, une telle porte principale d'accès 34 peut être en tout ou partie transparente de manière à pouvoir contrôler visuellement la présence d'eau dans la structure mobile 3 et/ou la présence de contenants 5 et/ou la présence et la vivacité des produits aquacoles 2.

Telle que représentée à la figure 2, une telle structure mobile 3 comporte un compartiment de stockage 4 adapté pour accueillir les contenants 5 et un compartiment technique 6 permettant notamment de faire circuler dans le compartiment de stockage 4 et de traiter l'eau en sortie de ce compartiment de stockage 4. Les contenants 5 sont ici représentés sous la forme de blocs juxtaposés et superposés tels que décrits notamment dans les documents FR 3 019 711 et WO 2016/020579.

Par ailleurs tels que représentés, le compartiment de stockage 4 et le compartiment technique 6 peuvent former un ensemble monobloc présentant deux parois longitudinales 26 et 27 communes. De telles parois longitudinales 26 et 27 sont ainsi agencées parallèlement par rapport à l'axe longitudinal X du dispositif 1.

Un tel dispositif 1 comporte également un circuit hydraulique 7 de circulation d'eau en continu pour au moins alimenter en eau saine le compartiment de stockage 4.

Sur la face 38 de l'enceinte isotherme 36, opposée à la face comportant les portes 37, le dispositif 1 peut comporter des organes de commande 21 pour commander une séquence de ballastage de toute l'eau contenue dans le compartiment de stockage 4 vers le compartiment technique 6. Le dispositif 1 peut également comporter au niveau de cette face 38 de l'enceinte isotherme 36 une unité frigorifique 25 permettant de réguler la température de l'eau circulant dans le compartiment de stockage 4.

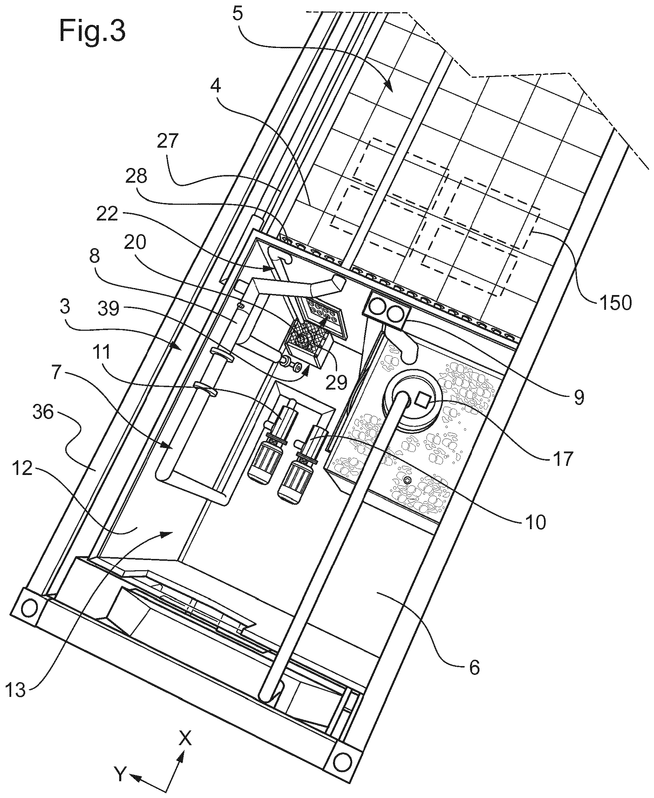

Telle que représentée à la figure 3, la structure mobile 3 peut comporter une cloison de séparation transversale 28 orientée sensiblement parallèlement à l'axe transversal Y.

Par ailleurs, le circuit hydraulique 7 de circulation d'eau en continu comporte un réseau d'alimentation 8 pour acheminer l'eau depuis le compartiment technique 6 vers le compartiment de stockage 4 et un réseau de retour 9 permettant d'acheminer l'eau depuis le compartiment de stockage 4 vers le compartiment technique 6. L'eau circulant dans ce circuit hydraulique 7 est pompée en bas du compartiment technique 6 au moyen de deux pompes de circulation 10 et 11 telles que représentées à la figure 3.

Une pompe de ballastage 20 est quant à elle agencée dans le compartiment technique 6 à l'intérieur d'un caisson étanche 39. Une telle pompe de ballastage 20 permet ainsi de transférer toute l'eau contenue dans le compartiment de stockage 4 vers le compartiment technique 6.

Un circuit hydraulique de ballastage 22 distinct du circuit hydraulique 7 permet alors ce transfert de l'eau entre le compartiment de stockage 4 et le compartiment technique 6.

Avantageusement, un tel compartiment technique 6 peut comporter une enveloppe étanche 12 permettant au compartiment technique 6 de former un réservoir de ballastage 13 dans lequel toute l'eau contenue dans le compartiment de stockage peut être directement transférée.

Par ailleurs telle que représentée, la cloison de séparation transversale 28 peut comporter une ouverture 29 pour donner accès au volume interne de ce compartiment technique 6 depuis le compartiment de stockage 4.

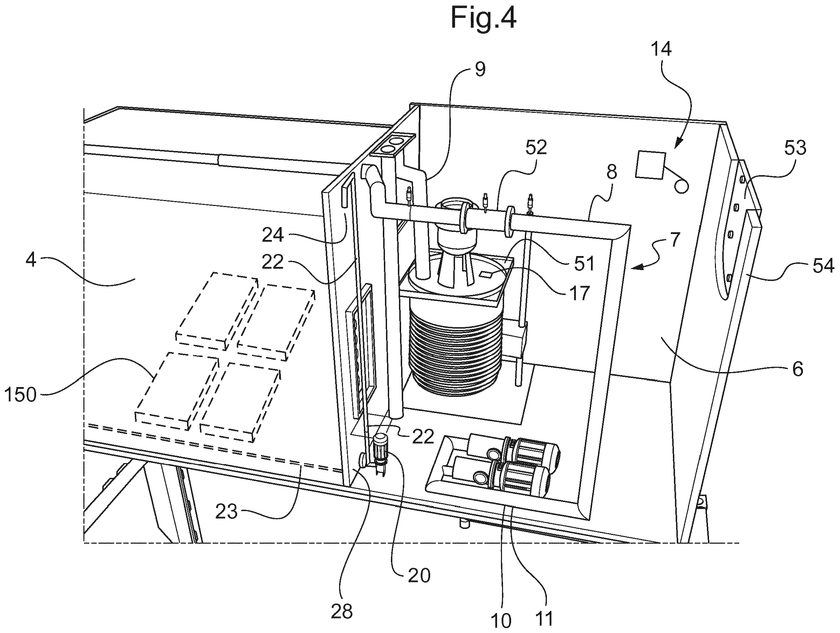

Tel que représenté à la figure 4, le circuit hydraulique de ballastage 22 permet de pomper l'eau dans une zone basse 23 du compartiment de stockage 4 pour l'acheminer dans une zone distale 24 du compartiment technique 6.

Un capteur de niveau 14 peut également être agencé à proximité de la zone distale 24 du compartiment technique 6 pour automatiquement stopper une séquence de ballastage lorsque le niveau de l'eau dans le compartiment technique 6 a atteint la hauteur prédéterminée. Un tel capteur de niveau 14 est alors connecté avec les organes de commande 21 permettant de commander l'arrêt de la pompe de ballastage 20.

De plus lors de la circulation en continu de l'eau dans le compartiment de stockage 4, en sortie du réseau de retour 9, l'eau est acheminée dans une partie haute du compartiment technique 6 et peut alors déborder et/ou encore tomber par gravité dans un système de traitement 51 permettant de filtrer l'eau, de l'oxygéner et de réguler sa température. Dans ce système de traitement 51 un capteur 17 peut effectuer une pluralité de mesures d'un paramètre physico-chimique de l'eau. Un tel capteur 17 peut par exempte permettre de mesurer le taux d'oxygène de l'eau, sa température ou encore son taux d'ammoniac. Un tel capteur 17 peut alors également être connecté avec les organes de commande 21 pour permettre de commander une séquence de ballastage si la mesure du paramètre physico-chimique permet par exemple de détecter un taux d'oxygène inférieur à une valeur de seuil prédéterminée.

En outre, un tel dispositif 1 peut également comporter un filtre UV 52 permettant de générer des rayonnements ultraviolets. Un tel filtre UV 52 est alors monté sur le réseau d'alimentation 8 ou immergé pour désinfecter l'eau avant son introduction dans le compartiment de stockage 4.

Une trappe de visite escamotable 53 peut par ailleurs être agencée dans la zone distale 24 du compartiment technique 6 sur une paroi arrière 54 agencée en regard de la face 38 de l'enceinte isotherme 36. Une telle trappe de visite escamotable 53 est avantageusement transparente pour permettre un contrôle visuel du volume interne du compartiment technique 6 depuis l'extérieur du dispositif 1 sans nécessiter le démontage de cette trappe de visite escamotable 53.

Par ailleurs, un tel dispositif 1 peut également comporter, dans un plancher agencé en dessous du compartiment de stockage 4, des coquilles vides de coquillages telles des coquilles de coques, de palourdes, d'huitres ou de moules positionnées à l'intérieur de paniers 150. De telles coquilles permettent en effet de servir de support à des bactéries nitrifiantes apte à se fixer à leurs surfaces pour filtrer biologiquement l'eau circulant dans le circuit hydraulique 7.

En outre, de telles bactéries nitrifiantes sont en effet capables d'oxyder biologiquement l'ammoniaque qui peut être produit par la décomposition des produits aquacoles 2 présents dans le compartiment de stockage 4. Par ailleurs, un tel positionnement des paniers 150 dans le plancher du compartiment de stockage 4 permet un accès rapide à un opérateur. Cet opérateur peut alors soulever une trappe du plancher pour procéder au remplacement des coquillages préalablement au positionnement des produits aquacoles 2 dans le dispositif 1 ou encore typiquement à chaque utilisation d'un tel dispositif 1 pour stocker et transporter des produits aquacoles 2.

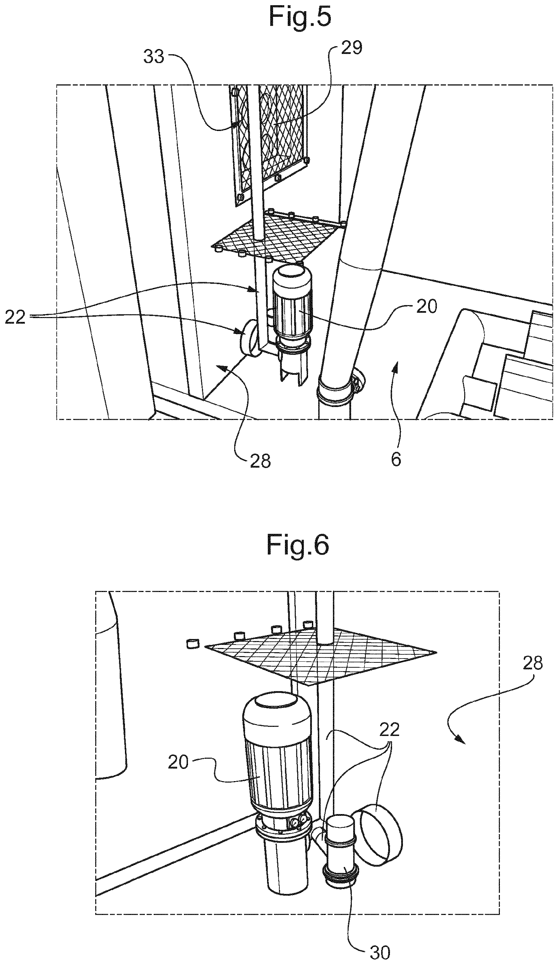

De même et telle que représentée à la figure 5, l'ouverture 29 ménagée dans la cloison de séparation transversale 28 peut être équipée d'une trappe de visite escamotable 33 pour donner accès à un opérateur au compartiment technique 6 depuis le compartiment de stockage 4.

Une telle trappe de visite escamotable 33 peut elle aussi être avantageusement transparente pour permettre un contrôle visuel direct du volume interne du compartiment technique 6 depuis le compartiment de stockage 4 sans nécessiter le démontage de cette trappe de visite escamotable 33.

Tel que représenté à la figure 6, le dispositif 1 peut également comporter une pompe de ballastage de secours 30 connectée en parallèle à la pompe de ballastage 20. Cette pompe de ballastage de secours 30 est ainsi également connectée hydrauliquement au circuit hydraulique de ballastage 22 pour permettre de vider toute l'eau contenue dans le compartiment de stockage 4 en cas de coupure électrique de l'alimentation générale.

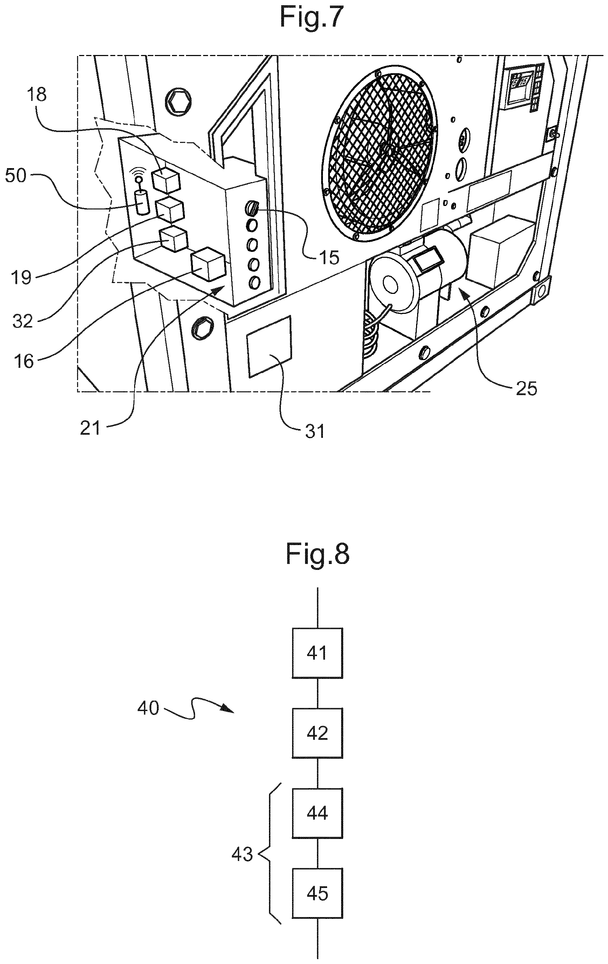

En effet, cette pompe de ballastage de secours 30 est alimentée en énergie électrique au moyen d'une source d'énergie autonome 31 telle que représentée à la figure 7. En outre, lorsque qu'une coupure de l'énergie électrique principale est détectée, les organes de commande 21 comportent un système de secours 32, également alimenté en énergie électrique via la source d'énergie autonome 31, permettant de commander automatiquement une séquence de ballastage.

La figure 7 montre aussi que les moyens de commande 21 comportent également un commutateur à actionnement manuel 15 pour permettre de déclencher manuellement une séquence de ballastage. Un tel commutateur à actionnement manuel 15 peut par exemple se présenter sous la forme d'un bouton rotatif à plusieurs positions stables ou encore d'un écran présentant une dalle à commande tactile. Une des différentes positions du commutateur à actionnement manuel 15 correspond alors au déclenchement du ballastage manuel du compartiment de stockage 4.

Par ailleurs, les organes de commande 21 peuvent également comporter un programmateur 16 pour par exemple programmer automatiquement une ou plusieurs séquence(s) de ballastage du compartiment de stockage 4 lors du stockage ou du transport des produits aquacoles 2 dans le dispositif 1.

Un tel programmateur 16 peut avantageusement être connecté à un module de connexion sans fil de type Wifi ou Bluetooth pour être programmé à distance par un opérateur connecté à un réseau sans fil apte à communiquer avec le programmateur 16.

Comme déjà évoqué un tel dispositif 1 peut comporter un capteur 17 apte à effectuer une pluralité de mesures d'un paramètre physico-chimique de l'eau en provenance du compartiment de stockage 4.

Dans ce cas, et tel que représenté à la figure 7, le dispositif 1 peut également comporter au moins une mémoire 18 pour stocker au moins une valeur de seuil prédéterminée du paramètre physico-chimique et une unité de calcul 19 pour comparer chaque mesure du paramètre physico-chimique avec la valeur de seuil prédéterminée.

De cette manière, les organes de commande 21 peuvent alors permettre de commander automatiquement au moins une séquence de ballastage lorsque la mesure du paramètre physico-chimique est supérieure, ou inversement inférieure selon le cas, à la valeur de seuil prédéterminée.

Une telle unité de calcul 19 peut comprendre par exemple un processeur, un circuit intégré, un système programmable, un circuit logique, ces exemples ne limitant pas la portée donnée à l'expression "unité de calcul".

Une telle unité de calcul 19 peut également permettre de générer un message d'alerte destiné à être transmis à une unité de gestion extérieure. Cette transmission peut alors avantageusement être réalisée par des moyens de communication sans fil 50 utilisant par exemple un module Wifi, Bluetooth ou encore une puce de type GSM ou GRPS notamment pour transmettre ce message d'alerte. De tels moyens de communication sans fil 50 permettent alors d'informer une personne supervisant la qualité de stockage et/ou de transport des produits aquacoles 2 présents dans le (ou les) dispositif(s) 1.

Enfin telle que représentée, l'unité frigorifique 25 peut comporter au moins un compresseur, un condenseur, un détendeur et un évaporateur dans lesquels un fluide frigorigène circule et permet d'échanger des calories avec l'eau circulant dans le filtre équipé d'un système de traitement 51.

Selon un autre objet de l'invention tel que représenté à la figure 8, le procédé 40 permet de stocker et de transporter des produits aquacoles dans des conditions optimales. Ce procédé 40 comporte en outre une étape préliminaire 41 consistant à disposer dans un compartiment de stockage 4 une pluralité de contenants 5 adaptés pour recevoir des produits aquacoles 2.

Une fois le compartiment de stockage 4 refermé de manière étanche, une étape de démarrage 42 permet de réaliser une circulation en continu d'une eau traitée depuis un compartiment technique 6 vers le compartiment de stockage 4 et une eau en provenance du compartiment de stockage 4 vers le compartiment technique 6.

Un tel procédé 40 comporte alors au moins une séquence de ballastage 43 comportant dans un premier temps une étape d'arrêt 44 de la circulation en continu de l'eau traitée depuis le compartiment technique 6 vers le compartiment de stockage 4 et de l'eau en provenance du compartiment de stockage 4 vers le compartiment technique 6.

Ensuite, la séquence de ballastage 43 met en œuvre une étape de pompage 45 pour réaliser ponctuellement et temporairement un transfert de toute l'eau contenue dans le compartiment de stockage 4 vers le compartiment technique 6.

Enfin, lorsque l'eau transférée dans le compartiment technique 6 atteint une hauteur prédéterminée, on stoppe l'étape de pompage 45.

En revanche, si l'eau transférée dans le compartiment technique 6 n'atteint pas la hauteur prédéterminée, l'étape de pompage 45 peut également être stoppée au bout d'une durée de pompage prédéterminée correspondant par exemple à la durée pour transférer vers le compartiment technique 6 une quantité d'eau maximale apte à être contenue dans le compartiment de stockage 4. Une telle durée de pompage est alors directement fonction du débit de la pompe de ballastage 20 utilisée lors de cette séquence de ballastage 43 et du volume d'eau maximum à transférer vers le compartiment technique 6.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif (1) pour stocker et transporter des produits aquacoles (2), ledit dispositif (1) comportant :
• une structure mobile (3) comportant :
- un compartiment de stockage (4) permettant de stocker une pluralité de contenants (5) adaptés pour recevoir lesdits produits aquacoles (2), et
- un compartiment technique (6) permettant de traiter en continu une eau en provenance du compartiment de stockage (4) puis de faire circuler une eau traitée vers ledit compartiment de stockage (4),
• un circuit hydraulique (7) de circulation d'eau en continu comportant :
- un réseau d'alimentation (8) permettant de mettre en communication hydraulique ledit compartiment technique (6) avec ledit compartiment de stockage (4),
- un réseau de retour (9) permettant de mettre en communication hydraulique ledit compartiment de stockage (4) avec ledit compartiment technique (6), et
- au moins une pompe de circulation (10, 11) pour alimenter en continu ledit compartiment de stockage (4) avec ladite eau traitée,
• au moins une pompe de ballastage (20) pour permettre ponctuellement et temporairement un transfert de toute l'eau contenue dans ledit compartiment de stockage (4) vers ledit compartiment technique (6),
**caractérisé en ce que** ledit dispositif (1) comporte :
• des organes de commande (21) pour au moins commander une séquence de ballastage, ladite séquence de ballastage étant mise en œuvre en commandant simultanément d'une part une coupure d'une alimentation en énergie électrique de ladite au moins une pompe de circulation (10, 11) et d'autre part une alimentation en énergie électrique de ladite au moins une pompe de ballastage (20), et
• un circuit hydraulique de ballastage (22) distinct dudit circuit hydraulique (7) de circulation d'eau en continu, ledit circuit hydraulique de ballastage (22) permettant de mettre en communication hydraulique au moins une zone basse (23) dudit compartiment de stockage (4) avec une zone distale (24) dudit compartiment technique (6).

2. Dispositif selon la revendication 1,
**caractérisé en ce que** ledit compartiment technique (6) comporte une enveloppe étanche (12) pour former un réservoir de ballastage (13) apte à contenir toute l'eau initialement contenue dans ledit compartiment de stockage (4) lors d'une séquence de ballastage.

3. Dispositif selon la revendication 2,
**caractérisé en ce que** ledit dispositif (1) comporte au moins un capteur de niveau (14) apte à détecter un niveau d'eau maximal à l'intérieur dudit réservoir de ballastage (13), lesdits organes de commande (21) permettant de commander une coupure de l'alimentation en énergie électrique de ladite au moins une pompe de ballastage (20) lorsque l'eau contenue dans ledit réservoir de ballastage (13) a atteint ledit niveau d'eau maximal.

4. Dispositif selon l'une quelconque des revendications 1 à 3,
**caractérisé en ce que** lesdits organes de commande (21) comportent un commutateur à actionnement manuel (15) permettant de commander manuellement ladite séquence de ballastage.

5. Dispositif selon l'une quelconque des revendications 1 à 4,
**caractérisé en ce que** lesdits organes de commande (21) comportent un programmateur (16) permettant de programmer à un instant prédéterminé au moins une séquence de ballastage.

6. Dispositif selon l'une quelconque des revendications 1 à 5, **caractérisé en ce que** ledit dispositif (1) comporte :
• au moins un capteur (17) apte à effectuer une pluralité de mesures d'un paramètre physico-chimique de l'eau en provenance dudit compartiment de stockage (4),
• au moins une mémoire (18) pour stocker au moins une valeur de seuil prédéterminée dudit paramètre physico-chimique, et
• une unité de calcul (19) pour comparer chaque mesure dudit paramètre physico-chimique avec ladite valeur de seuil prédéterminée,
lesdits organes de commande (21) permettant de commander automatiquement au moins une séquence de ballastage lorsque ladite mesure dudit paramètre physico-chimique est supérieure, ou inversement inférieure, à ladite valeur de seuil prédéterminée.

7. Dispositif selon l'une quelconque des revendications 1 à 6, **caractérisé en ce que** ledit dispositif (1) comporte :
• une pompe de ballastage de secours (30) connectée audit circuit hydraulique de ballastage (22), et
• une source d'énergie autonome (31) permettant d'alimenter en énergie électrique ladite pompe de ballastage de secours (30),
lesdits organes de commande (21) comportant un système de secours (32) pour commander automatiquement ladite séquence de ballastage au moyen de ladite pompe de ballastage de secours (30).

8. Dispositif selon l'une quelconque des revendications 1 à 7,
**caractérisé en ce que** ladite structure mobile (3) comporte une enceinte isotherme (36) permettant de contenir ledit compartiment de stockage (4) et ledit compartiment technique (6).

9. Dispositif selon la revendication 8,
**caractérisé en ce que** ladite enceinte isotherme (36) comporte une unité frigorifique (25) permettant de réguler la température de l'eau traitée dans ledit compartiment technique (6).

10. Dispositif selon l'une quelconque des revendications 1 à 9,
**caractérisé en ce que** ledit compartiment de stockage (4) et ledit compartiment technique (6) forment un ensemble monolithique, ledit compartiment de stockage (4) et ledit compartiment technique (6) comportant des parois longitudinales (26) et (27) communes formées en continu dans un même matériau, lesdites parois longitudinales (26, 27) étant agencées parallèlement par rapport à un axe longitudinal X dudit dispositif (1).

11. Dispositif selon l'une quelconque des revendications 1 à 10,
**caractérisé en ce que** ladite structure mobile (3) comporte une cloison de séparation transversale (28) séparant ledit compartiment de stockage (4) et ledit compartiment technique (6), ladite cloison de séparation transversale (28) étant agencée parallèlement par rapport à un axe transversal Y dudit dispositif.

12. Dispositif selon la revendication 11,
**caractérisé en ce que** ladite cloison de séparation transversale (28) comporte une ouverture (29) équipée d'une trappe de visite (33) escamotable permettant à un opérateur un accès au volume interne dudit compartiment technique (6).

13. Dispositif selon l'une quelconque des revendications 1 à 12,
**caractérisé en ce que** ladite structure mobile (3) comporte une porte principale d'accès (34) audit compartiment de stockage (4), ladite porte principale d'accès (34) étant au moins partiellement transparente.

14. Dispositif selon l'une quelconque des revendications 1 à 13,
**caractérisé en ce que** ladite structure mobile (3) comporte au moins une pièce de préhension (35) permettant de réaliser une manipulation et un déplacement du dispositif (1) au moyen d'un engin de manutention.

15. Procédé (40) pour stocker et transporter des produits aquacoles (2) dans un dispositif selon l'une des revendications 1 à 14, ledit procédé (40) comportant :
• une étape préliminaire (41) consistant à disposer dans un compartiment de stockage (4) dudit dispositif une pluralité de contenants (5) adaptés pour recevoir lesdits produits aquacoles (2),
• une étape de démarrage (42) d'une circulation en continu d'une eau traitée depuis un compartiment technique (6) dudit dispositif vers ledit compartiment de stockage (4) et d'une eau en provenance du compartiment de stockage (4) vers ledit compartiment technique (6), ladite circulation en continu étant mise en œuvre par au moins une pompe de circulation (10, 11),
• au moins une séquence de ballastage (43) pour permettre ponctuellement et temporairement un transfert de toute l'eau contenue dans ledit compartiment de stockage (4) vers ledit compartiment technique (6), ladite au moins une séquence de ballastage (43) étant mise en œuvre par au moins une pompe de ballastage (20),
**caractérisé en ce que** ladite au moins une séquence de ballastage (43) comporte :
• une étape d'arrêt (44) générant une coupure d'une alimentation en énergie électrique de ladite au moins une pompe de circulation (10, 11), puis
• une étape de pompage (45) générant une alimentation en énergie électrique de ladite au moins une pompe de ballastage (20) pour réaliser ponctuellement et temporairement ledit transfert de toute l'eau contenue dans ledit compartiment de stockage (4) vers ledit compartiment technique (6), ledit transfert s'effectuant dans un circuit hydraulique de ballastage (22) distinct d'un circuit hydraulique (7) de circulation d'eau en continu, ledit circuit hydraulique de ballastage (22) permettant de mettre en communication hydraulique au moins une zone basse (23) dudit compartiment de stockage (4) avec une zone distale (24) dudit compartiment technique (6).

## Patentansprüche

1. Vorrichtung (1) zum Lagern und Transportieren von Aquakulturprodukten (2), wobei die Vorrichtung (1) umfasst:
• eine mobile Struktur (3), die umfasst:
- ein Lagerabteil (4) zur Lagerung einer Mehrzahl von Behältern (5), die eingerichtet sind, die Aquakulturprodukte (2) aufzunehmen, und
- ein Technikabteil (6) zur kontinuierlichen Aufbereitung von Wasser aus dem Lagerabteil (4) und zur anschließenden Zirkulation des aufbereiteten Wassers in das Lagerabteil (4),
• einen Hydraulikkreislauf (7) für kontinuierliche Wasserzirkulation mit:
- einem Versorgungsnetz (8) zum Herstellen einer hydraulischen Verbindung zwischen dem Technikabteil (6) und dem Lagerabteil (4),
- einem Rücklaufnetz (9) zum Herstellen einer hydraulischen Verbindung zwischen dem Lagerabteil (4) und dem Technikabteil (6), und
- mindestens einer Zirkulationspumpe (10, 11) zum kontinuierlichen Versorgen des Lagerabteils (4) mit dem aufbereiteten Wasser,
• mindestens eine Ballastpumpe (20), um eine punktuelle und vorübergehende Übertragung des gesamten in dem Lagerabteil (4) enthaltenen Wassers in das Technikabteil (6) zu ermöglichen,
**dadurch gekennzeichnet, dass** die Vorrichtung (1) umfasst:
• Steuerelemente (21) zum Steuern mindestens einer Ballastierungssequenz, wobei die Ballastierungssequenz durch gleichzeitiges Steuern einerseits einer Unterbrechung einer elektrischen Stromversorgung der mindestens einen Zirkulationspumpe (10, 11) und andererseits des Versorgens der mindestens einen Ballastpumpe (20) mit elektrischer Energie durchgeführt wird, und
• einen von dem Hydraulikkreis (7) für kontinuierliche Wasserzirkulation getrennten hydraulischen Ballastkreis (22), wobei der hydraulische Ballastkreis (22) es ermöglicht, mindestens einen unteren Bereich (23) des Lagerabteils (4) in hydraulische Verbindung mit einem distalen Bereich (24) des Technikabteils (6) zu bringen.

2. Vorrichtung nach Anspruch 1,
**dadurch gekennzeichnet, dass** das Technikabteil (6) eine wasserdichte Hülle (12) aufweist, um einen Ballasttank (13) zu bilden, der in der Lage ist, während einer Ballastierungssequenz das gesamte ursprünglich in dem Lagerabteil (4) enthaltene Wasser aufzunehmen.

3. Vorrichtung nach Anspruch 2,
**dadurch gekennzeichnet, dass** die Vorrichtung (1) mindestens einen Pegelsensor (14) umfasst, der in der Lage ist, einen maximalen Wasserstand im Inneren des Ballasttanks (13) zu erfassen, und dass die Steuerelemente (21) es ermöglichen, eine Unterbrechung der elektrischen Stromversorgung der mindestens einen Ballastpumpe (20) zu steuern, wenn das in dem Ballasttank (13) enthaltene Wasser den maximalen Wasserstand erreicht hat.

4. Vorrichtung nach einem der Ansprüche 1 bis 3,
**dadurch gekennzeichnet, dass** die Steuerelemente (21) einen manuell betätigbaren Schalter (15) aufweisen, mit dem die Ballastierungssequenz manuell steuerbar ist.

5. Vorrichtung nach einem der Ansprüche 1 bis 4,
**dadurch gekennzeichnet, dass** die Steuerelemente (21) ein Programmiergerät (16) umfassen, das es ermöglicht, mindestens eine Ballastierungssequenz zu einer vorbestimmten Zeit zu programmieren.

6. Vorrichtung nach einem der Ansprüche 1 bis 5,
**dadurch gekennzeichnet, dass** die Vorrichtung (1) umfasst :
• mindestens einen Sensor (17), der in der Lage ist, eine Mehrzahl von Messungen eines physikalisch-chemischen Parameters des aus dem Lagerabteil (4) kommenden Wassers durchzuführen,
• mindestens einen Speicher (18) zum Speichern mindestens eines vorgegebenen Schwellenwertes des physikalisch-chemischen Parameters, und
• eine Recheneinheit (19) zum Vergleich jeder Messung des physikalisch-chemischen Parameters mit dem vorgegebenen Schwellenwert,
wobei die Steuerelemente (21) es ermöglichen, mindestens eine Ballastierungssequenz automatisch zu steuern, wenn die Messung des physikalisch-chemischen Parameters höher oder umgekehrt niedriger als der vorgegebene Schwellenwert ist.

7. Vorrichtung nach einem der Ansprüche 1 bis 6,
**dadurch gekennzeichnet, dass** die Vorrichtung (1) umfasst:
• eine Notballastpumpe (30), die mit dem hydraulischen Ballastkreislauf (22) verbunden ist; und
• eine netzunabhängige Stromquelle (31) zur Versorgung der Notballastpumpe (30) mit elektrischer Energie,
wobei die Steuerelemente (21) ein Notsystem (32) zum automatischen Steuern der Ballastierungssequenz mittels der Notballastpumpe (30) aufweisen.

8. Vorrichtung nach einem der Ansprüche 1 bis 7,
**dadurch gekennzeichnet, dass** die mobile Struktur (3) ein isolierende Hülle (36) zur Aufnahme des Lagerabteils (4) und des Technikabteils (6) umfasst.

9. Vorrichtung nach Anspruch 8,
**dadurch gekennzeichnet, dass** die isolierende Hülle (36) eine Kühleinheit (25) zum Regeln der Temperatur des in dem Technikabteil (6) aufbereiteten Wassers umfasst.

10. Vorrichtung nach einem der Ansprüche 1 bis 9,
**dadurch gekennzeichnet, dass** das Lagerabteil (4) und das Technikabteil (6) eine monolithische Einheit bilden, dass das Lagerabteil (4) und das Technikabteil (6) gemeinsame Längswände (26) und (27) aufweisen, die durchgehend aus einem gleichen Material gebildet sind, und dass die Längswände (26, 27) parallel zu einer Längsachse X der Vorrichtung (1) angeordnet sind.

11. Vorrichtung nach einem der Ansprüche 1 bis 10,
**dadurch gekennzeichnet, dass** die mobile Struktur (3) eine Quertrennwand (28) umfasst, die das Lagerabteil (4) und das Technikabteil (6) trennt, wobei die Quertrennwand (28) parallel zu einer Querachse Y der Vorrichtung angeordnet ist.

12. Vorrichtung nach Anspruch 11,
**dadurch gekennzeichnet, dass** die Quertrennwand (28) eine Öffnung (29) aufweist, die mit einer versenkbaren Inspektionsluke (33) versehen ist, die einer Bedienungsperson den Zugang zum Innenvolumen des Technikabteils (6) ermöglicht.

13. Vorrichtung nach einem der Ansprüche 1 bis 12,
**dadurch gekennzeichnet, dass** die mobile Struktur (3) eine Hauptzugangstür (34) zu dem Lagerabteil (4) umfasst, und dass die Hauptzugangstür (34) zumindest teilweise transparent ist.

14. Vorrichtung nach einem der Ansprüche 1 bis 13,
**dadurch gekennzeichnet, dass** die bewegliche Struktur (3) mindestens ein Greifteil (35) umfasst, das es ermöglicht, die Vorrichtung (1) mit Hilfe eines Handhabungsgerätes zu manipulieren und zu bewegen.

15. Verfahren (40) zum Lagern und Transportieren von Aquakulturprodukten (2) in einer Vorrichtung nach einem der Ansprüche 1 bis 14, wobei das Verfahren (40) umfasst :
• einen vorbereitenden Schritt (41), der darin besteht, in einem Lagerabteil (4) der Vorrichtung eine Mehrzahl von Behältern (5) anzuordnen, die geeignet sind, die Aquakulturprodukte (2) aufzunehmen,
• einen Schritt (42) des Startens einer kontinuierlichen Zirkulation von aufbereitetem Wasser aus einem Technikabteil (6) der Vorrichtung zu dem Lagerabteil (4) und von Wasser aus dem Lagerabteil (4) zu dem Technikabteil (6), wobei die kontinuierliche Zirkulation durch mindestens eine Zirkulationspumpe (10, 11) realisiert wird,
• mindestens eine Ballastierungssequenz (43), um eine punktuelle und vorübergehende Übertragung des gesamten in dem Lagerabteil (4) enthaltenen Wassers in das Technikabteil (6) zu ermöglichen, wobei die mindestens eine Ballastierungssequenz (43) durch mindestens eine Ballastpumpe (20) ausgeführt wird,
**dadurch gekennzeichnet, dass** die mindestens eine Ballastierungssequenz (43) umfasst :
• einen Abschaltschritt (44), der eine Unterbrechung einer elektrischen Stromversorgung für die mindestens eine Zirkulationspumpe (10, 11) bewirkt, und dann
• einen Pumpschritt (45), der eine elektrische Stromversorgung für die mindestens eine Ballastpumpe (20) bewirkt, um punktuell und vorübergehend die Übertragung des gesamten in dem Lagerabteil (4) enthaltenen Wassers zu dem Technikabteil (6) durchzuführen, wobei die Übertragung in einem hydraulischen Ballastkreislauf (22) erfolgt, der von einem Hydraulikkreislauf (7) für eine kontinuierliche Wasserzirkulation getrennt ist, wobei der hydraulische Ballastkreislauf (22) es ermöglicht, mindestens einen unteren Bereich (23) des Lagerabteils (4) mit einem distalen Bereich (24) des Technikabteils (6) in hydraulische Verbindung zu bringen.

## Claims

1. A device (1) for storing and transporting aquaculture products (2), said device (1) including:
• a mobile structure (3), including:
- a storage compartment (4) suitable for storing a plurality of containers (5) adapted to receive said aquaculture products (2); and
- a technical compartment (6) suitable for continuously treating water coming from the storage compartment (4), and for then causing treated water to flow towards said storage compartment (4);
• a continuous water flow hydraulic circuit (7) including:
- a feed network (8) suitable for putting said technical compartment (6) into hydraulic communication with said storage compartment (4) ;
- a return communication network (9) suitable for putting said storage compartment (4) into hydraulic communication with said technical compartment (6); and
- at least one flow pump (10, 11) for continuously feeding said storage compartment (4) with said treated water; and
• at least one ballasting pump (20) for enabling all of the water contained in said storage compartment (4) to be transferred occasionally and temporarily to said technical compartment (6);
said device being **characterized in that** said device (1) further includes:
• control members (21) for at least causing a ballasting sequence to take place, said ballasting sequence being implemented by simultaneously causing firstly an electrical power supply to said at least one flow pump (10, 11) to be interrupted, and secondly said at least one ballasting pump (20) to be electrically powered; and
• a ballasting hydraulic circuit (22) distinct from said continuous water flow hydraulic circuit (7), said ballasting hydraulic circuit (22) enabling at least a low region (23) of said storage compartment (4) to be put into hydraulic communication with a distal region (24) of said technical compartment (6).

2. A device according to claim 1,
**characterized in that** said technical compartment (6) includes a watertight casing (12) for forming a ballasting tank (13) suitable for containing all of the water initially contained in said storage compartment (4) during a ballasting sequence.

3. A device according to claim 2,
**characterized in that** said device (1) includes at least one level sensor (14) suitable for detecting a maximum water level inside said ballasting tank (13), said control members (21) enabling the electrical power supply to said at least one ballasting pump (20) to be caused to be interrupted when the water contained in said ballasting tank (13) has reached said maximum water level.

4. A device according to any one of claims 1 to 3, **characterized in that** said control members (21) include a manually actuated switch (15) suitable for manually controlling said ballasting sequence.

5. A device according to any one of claims 1 to 4,
**characterized in that** said control members (21) include a programmer (16) enabling at least one ballasting sequence to be programmed at a predetermined instant.

6. A device according to any one of claims 1 to 5, **characterized in that** said device (1) further includes:
• at least one sensor (17) suitable for taking a plurality of measurements of a physico-chemical parameter of the water coming from said storage compartment (4);
• at least one memory (18) for storing at least one predetermined threshold value for said physico-chemical parameter; and
• a computer unit (19) for comparing each measurement of said physico-chemical parameter with said predetermined threshold value;
said control members (21) enabling at least one ballasting sequence to be caused automatically to take place when said measurement of said physico-chemical parameter is greater than, or conversely less than, said predetermined threshold value.

7. A device according to any one of claims 1 to 6, **characterized in that** said device (1) further includes:
• a backup ballasting pump (30) connected to said ballasting hydraulic circuit (22); and
• an independent energy source (31) enabling said backup ballasting pump (30) to be electrically powered;
said control members (21) including a backup system (32) for automatically controlling said ballasting sequence by means of said backup ballasting pump (30).

8. A device according to any one of claims 1 to 7,
**characterized in that** said mobile structure (3) includes an isothermal enclosure (36) suitable for containing said storage compartment (4) and said technical compartment (6).

9. A device according to claim 8,
**characterized in that** said isothermal enclosure (36) includes a refrigeration unit (25) suitable for regulating the temperature of the water treated in said technical compartment (6).

10. A device according to any one of claims 1 to 9,
**characterized in that** said storage compartment (4) and said technical compartment (6) form a monolithic assembly, said storage compartment (4) and said technical compartment (6) having common longitudinal walls (26) and (27) formed continuously of the same material, said longitudinal walls (26, 27) being arranged parallel relative to a longitudinal axis X of said device (1).

11. A device according to any one of claims 1 to 10,
**characterized in that** said mobile structure (3) includes a transverse separating partition (28) separating said storage compartment (4) and said technical compartment (6), said transverse separating partition (28) being arranged parallel relative to a transverse axis Y of said device.

12. A device according to claim 11,
**characterized in that** said transverse separation partition (28) is provided with an opening (29) equipped with a removable or retractable inspection hatch (33) enabling an operative to have access to the inside volume of said technical compartment (6).

13. A device according to any one of claims 1 to 12,
**characterized in that** said mobile structure (3) has a main access door (34) giving access to said storage compartment (4), said main access door (34) being at least partially transparent.

14. A device according to any one of claims 1 to 13,
**characterized in that** said mobile structure (3) includes at least one handleable piece (35) enabling the device (1) to be handled and moved by means of goods-handling equipment.

15. A method (40) for storing and transporting aquaculture products (2) in a device according to any one of claims 1 to 14, said method (40) including:
• a preliminary step (41) consisting in disposing a plurality of containers (5) adapted to receive said aquaculture products (2) in a storage compartment (4) of said device;
• a starting step (42) for starting a continuous flow of treated water from a technical compartment (6) of said device to said storage compartment (4), and of water from the storage compartment (4) to said technical compartment (6), said continuous flow being implemented by at least one flow pump (10, 11); and
• at least one ballasting sequence (43) for enabling all of the water contained in said storage compartment (4) to be transferred occasionally and temporarily to said technical compartment (6), said at least one ballasting sequence (43) being implemented by at least one ballasting pump (20);
said method being **characterized in that** said at least one ballasting sequence (43) includes:
• a stopping step (44) generating an interruption in the electrical power supply to said at least one flow pump (10, 11); and then
• a pumping step (45) generating an electrical power supply to said at least one ballasting pump (20) for occasionally and temporarily performing said transfer of all of the water contained in said storage compartment (4) to said technical compartment (6), said transfer taking place through a ballasting hydraulic circuit (22) distinct from a continuous water flow hydraulic circuit (7), said ballasting hydraulic circuit (22) enabling at least a low region (23) of said storage compartment (4) to be put into communication with a distal region (24) of said technical compartment (6).
